# EUROPÄISCHE PATENTSCHRIFT

(11) **EP 2 106 335 B1**
(45) Veröffentlichungstag und Bekanntmachung des Hinweises auf die Patenterteilung: **21.11.2012**
(21) Anmeldenummer: 07819094.9
(22) Anmeldetag: 18.10.2007
(51) Int. Cl.: B29C 47/68

(54) **VERFAHREN ZUR FILTRATION VON SUBSTRATMATERIALIEN**
METHOD FOR FILTERING SUBSTRATE MATERIALS
PROCÉDÉ POUR FILTRER DES MATÉRIAUX SUBSTRATS

(30) Priorität: 31.10.2006 DE 102006051305
(43) Veröffentlichungstag der Anmeldung: 07.10.2009
(73) Patentinhaber: Bayer MaterialScience AG, 51368 Leverkusen (DE)
(72) Erfinder: EBERT, Wolfgang, 47800 Krefeld (DE); NIETZWETZKI, Bernhard, 47226 Duisburg (DE); MELLIS, Rainer, Baytown, TX 77520-9730 (US); HAESE, Wilfried, 51519 Odenthal (DE); RUYTINX, Bert, 3545 Halen (BE); KARBACH, Alexander, 47800 Krefeld (DE); MEYER, Alexander, 40489 Düsseldorf (DE)
(74) Vertreter: Bayer Intellectual Property GmbH
(86) Internationale Anmeldenummer: PCT/EP2007/009026
(87) Internationale Veröffentlichungsnummer: WO 2008/052664

(56) Entgegenhaltungen:
- EP-A- 0 379 130
- EP-A- 0 652 098
- DE-C1- 19 732 458
- JP-A- 2003 300 226

## Beschreibung

Gegenstand der Erfindung ist ein Verfahren zur Filtration von Substratmaterialien, die zur Herstellung transparenter Spritzgusskörper, insbesondere zur Herstellung von Spritzgusskörpern, die für die Herstellung von optischen Datenträgern, insbesondere mit hoher Speicherdichte, sowie weitere Formteile von hoher optischer Qualität geeignet sind. Dieses Verfahren ist sowohl für Polycarbonate, die über das Phasengrenzflächenverfahren als auch für Polycarbonate, die im Schmelzeumesterungsprozess hergestellt werden, geeignet.

Bei den transparenten Spritzgusskörpern kann es sich z. B. um transparente Platten, Linsen, optische Speichermedien, oder auch um Partikel aus dem Bereich des Automotive Glazings wie z. B. Streulichtscheiben handeln, bei denen eine hohe optische Qualität nötig ist. Ferner ist dieses Verfahren für Substratmaterialien geeignet, aus denen Extrusionsfolien hergestellt werden, bei denen eine Defektstellen-arme Oberfläche von Bedeutung ist.

Transparente Spritzgusskörper sind vor allem im Bereich des Glazings und der Speichermedien von Bedeutung.

Optische Datenaufzeichnungsmaterialien sind in der letzten Zeit in wachsendem Maße als ein variables Aufzeichnungs- und/oder Archivierungsmedium für große Datenmengen in Gebrauch gekommen. Beispiele für diese Art von optischen Datenspeichern sind z. B. CD, Super- Audio-CD, CD-R, CD-RW, DVD, DVD-R, DVD+R, DVD-RW, DVD+RW und BD.

Für optische Speichermedien werden typischerweise transparente thermoplastische Kunststoffe eingesetzt wie zum Beispiel Polycarbonat und chemische Modifikationen hiervon. Als Substratmaterial insbesondere für einmal beschreibbare und mehrfach auslesbare sowie auch für mehrfach beschreibbare optische Disks eignet sich vor allem aromatisches Polycarbonat, insbesondere Polycarbonat auf Basis von Bisphenol A. Polycarbonat eignet sich ebenfalls gut für die Herstellung von Formteilen aus dem Bereich des Automotive Glazings, wie z. B. von Streulichtscheiben. Dieser thermoplastische Kunststoff verfügt über eine ausgezeichnete mechanische Stabilität, ist wenig anfällig gegenüber Dimensionsveränderungen und zeichnet sich durch eine hohe Transparenz und Schlagzähigkeit aus.

Um größere Datenmengen auf einem Datenträger zu speichern, wurden nach der CD Formate wie die DVD entwickelt. Diese erlauben aufgrund ihrer erhöhten Speicherkapazität z. B. das Speichern von Spielfilmen. So besitzt die DVD im Vergleich zur CD eine 6-8 fach größere Aufnahmekapazität. Dies wurde möglich durch kleinere Pits, geringere Spurabstände und eine Verringerung der Laserwellenlänge von ca. 780 nm auf ca. 655 nm beim DVD Format. Des Weiteren wurde die numerische Apertur des optischen Auslesesystems erhöht.

Die Entwicklung neuer Formate wie z. B. die HD-DVD (High Density DVD) oder die sogenannte Blu ray Disk (BD) arbeiten wiederum mit kürzeren Laserwellenlängen. Bei der BD wird durch ein transparentes Coverlayermaterial (z. B. PC-Film) ausgelesen.

Dadurch werden die Anforderungen an das durchleuchtete Substratmaterial oder das durchleuchtete Coverlayermaterial immer höher. Je höher die Speicherdichte des jeweiligen Mediums, desto höher sind die qualitativen Anforderungen (z. B. geringer Partikelgehalt) an das Substratmaterial. Fehlstellen in der durchleuchteten Substratschicht bzw. in dem durchleuchteten Coverlayermaterial führen zu Fehlern im Ausleseprozess.

So sind insbesondere Fehlstellen, welche mit dem Laserstrahl des Auslesesystems in Wechselwirkung treten können von besonderer Relevanz hinsichtlich eines fehlerfreien Ausleseprozesses. Dazu gehören bekanntermaßen Fremdpartikel, wie z. B. Staubpartikel oder Metallpartikel, die den Laserstrahl absorbieren und/oder streuen können. Durch die Verringerung der Wellenlänge des Ausleselasers sind zusätzlich solche Partikel schädlich, deren Absorption oder Fluoreszenz innerhalb der Wellenlänge des verwendeten Lasers liegt. Bei der HD-DVD (High Density DVD) oder Blu ray Disk sind dies z. B. Wellenlängen zwischen 400 nm - 410 nm.

Hochwertige Extrusionsfolien, für die diese Substratmaterialien auch geeignet sind, werden vor allem im Elektronikbereich, für dekorative und funktionelle Blenden im Haushaltsgerätebereich, als Deckfolien z. B. für Sportartikel für ID-Karten und Blisterverpackungen eingesetzt. Weitere Anwendungsgebiete liegen im Bereich des Automobilbaus, wie z. B. Karosserieteile oder Außenspiegel, oder im Bereich der Telekommunikation, wie z. B. Handyschalen und Handy Tastaturen. Die Folien zeichnen sich durch hohe Transparenz, Schlagzähigkeit und Wärmeformbeständigkeit aus. Ein weiteres kritisches Qualitätsmerkmal ist die Oberflächengüte der Folie. Insbesondere bei hochwertigen Gehäuse- und Displayabdeckungen fallen Störungen in der Oberfläche leicht auf, was zu erhöhter Ausschussrate führt.

Die Schmelzefiltration von Polymeren ist im Prinzip bekannt und zum Beispiel in EP-A 0806281 und EP-A 0220324 beschrieben. Auch die Schmelzefiltration von Polycarbonat im besonderen ist zum Beispiel in EP-A 1199325 beschrieben. Die Filtration der hochviskosen Polymerschmelze ist nicht unkritisch, da häufig hohe Drücke erforderlich sind, die Scherung im Filter zu einer wesentlichen Schererwärmung führen kann, was eine thermische Zersetzung des Polycarbonats zur Folge haben kann. Je nach Verweilzeit im Filter und Temperatur der Polymerschmelze kann es in Folge der Wechselwirkung mit der großen Metalloberfläche ebenfalls zur Schädigung des Polycarbonats kommen. Je nach Druck und Durchsatz besteht die Gefahr, dass fluoreszierende Partikel durch das Filtermedium hindurchgedrückt werden bzw. durch die oben genannten Faktoren generiert werden.

Die Aufgabe der vorliegenden Erfindung ist daher ein Verfahren zur Filtration der Polymerschmelze, insbesondere Polycarbonatschmelze, bereit zu stellen, das es ermöglicht fluoreszierende Partikel vom Polycarbonat abzutrennen und somit ein Substratmaterial mit geringem Gehalt an fluoreszierenden Partikeln zu erhalten.

In JP 04-342760 (1992) wird eine Schmelzefiltration für hochviskoses Polycarbonat beschrieben. Die darin beschriebene Schmelzefiltration erfolgt mit Filtermedien mit einer Porengröße von 20 µm. Das Filtermedium ist nicht weiter spezifiziert. Die Zurückhaltung von fluoreszierenden Partikeln ist nicht erwähnt.

In EP-A 1156071 wird eine Passivierung von Filtermedien mit schwachen Säuren wie z. B. Phenol beschrieben. Dadurch wird erreicht, dass sich der Yellowness Index des filtrierten Materials verbessert. Fluoreszierende Partikel werden nicht beschrieben. Für die Reduktion fluoreszierender Partikel ist diese Methode und die Filtration mit derart vorbehandelten Filtern ungeeignet.

In JP 2001310935 wird eine Schmelzefiltration zur Beseitigung von Verunreinigungen in Polycarbonat beschrieben. Die Abtrennung fluoreszierender Partikel ist nicht beschrieben. Die Temperatur der Schmelze, die den Filter passiert, beträgt 280 bis 340°C Die Schmelzefiltration erfolgt mit Filtern einer Porengröße von 0.5 bis 50 µm. Das Filtermedium ist nicht genau spezifiziert. So wird z. B. die Dicke des Filtermediums nicht beschrieben. Der Partikelgehalt hängt allerdings auch vom Gehalt an freiem Bisphenol ab. Im Gegensatz dazu, ist bei dem hier beschriebenen erfindungsgemäßen Verfahren der Bisphenolgehalt von nachrangiger Bedeutung. Eine Vorbehandlung von Filtermedien wird nicht beschrieben.

In EP-A 1199325 wird eine Schmelzefiltration beschrieben. Die Schmelzefiltration erfolgt über Filtermedien mit einer Porengröße von ≤40 µm. Jedoch wird nichts über die Dicke der Filterschicht ausgesagt, welches eine entscheidende Größe ist, um die hier beschriebenen Partikel zurückzuhalten Es wird über keine Methode berichtet, die fluoreszierende Partikel mit bestimmten viskosen Eigenschaften zurückhält. Die Filtermedien werden nicht vorbehandelt.

In JP 2003048975 wird die Herstellung von Polycarbonat im Schmelzeumesterungsprozess beschrieben. Bei diesem Prozess werden die aufgeschmolzenen Rohstoffe einer Filtration durch einen passivierten Filter unterworfen. Auf die Bildung und Abtrennung fluoreszierender Partikel wird nicht eingegangen. Die erfindungsgemäße Methode weicht von der in JP 2003048975 beschriebenen Methode ab, da in der japanischen Offenlegung die Rohstoffe und nicht die Polymersschmelze filtriert werden.

Keine der oben genannten Veröffentlichungen beschreibt die erfindungsgemäße Filtration oder erwähnt den Gehalt an fluoreszierenden Partikeln im Polycarbonat. Die oben genannten Methoden führen nicht zu einer effektiven Reduktion von fluoreszierenden Partikeln in Polycarbonat.

Es ist bekannt, dass Substratmaterialien für optische Datenspeicher Fremdkörper enthalten. In EP-A 379130 ist z. B. beschrieben, dass diese Fremdkörper das Beschreiben oder das Auslesen eines optischen Datenträgers mittels eines Laserstrahls negativ beeinflussen können. Ein Substratmaterial besitzt dann eine gute Qualität, wenn ein bestimmter, in diesem Patent beschriebener, Partikelgehalt (Partikelindex) unterhalb eines bestimmten Werts liegt. Bei den Fremdkörpern kann es sich um Staub oder um verkohltes Material oder Metallabrieb handeln. Diese vom Substratmaterial deutlich zu unterscheidenden Fremdkörper werden in einem Lösungsmittel detektiert, in welchem das Substratmaterial selbst löslich ist. Diese Fremdkörper, die in diesem Lösungsmittel detektiert werden können, sind nicht Gegenstand der vorliegenden Anmeldung. Die hier beschriebenen Fremdpartikel sind in einem Lösungsmittel in welchem das Substratmaterial löslich ist, nicht zu detektieren, da sie einen ähnlichen Brechungsindex wie die zu messende Polycarbonatlösung besitzen. So sind diese Partikel beispielsweise durch einen dem Stand der Technik entsprechenden Hiac Royco Test, wie z. B. in DE 102 48 951 beschrieben, nicht zu detektieren.

In JP-A-02-135222 werden Fremdkörper mit Gel-artigem Charakter beschrieben, welche einen von der Matrix verschiedenen Brechungsindex aufweisen. Diese Partikel können ebenfalls die Qualität des optischen Datenspeichers mindern. Diese Partikel lassen sich z. B. durch Zusatz von Wasser in einem Extrusionsprozess deutlich verringern. Diese Partikel unterscheiden sich von den hier beschriebenen Partikeln, da der Brechungsindex der hier beschriebenen Partikel im wesentlichen nicht von dem der Matrix abweicht. Ferner lassen sich die hier beschriebenen Partikel nicht durch den Zusatz von Wasser in einem Extrusionsprozess entfernen bzw. deren Gehalt reduzieren.

JP-A-2003 300226 beschreibt ein Verfahren zur Herstellung von polymerischen Materialien, wobei eine Mischung aus einem Isocyanat Prepolymer und einem aromatischen Diamin gefiltert werden um Partikel zu entfernen.

Es wurde gefunden, dass Substratmaterialien, insbesondere Substratmaterialien auf Polycarbonatbasis, Partikel enthalten, die Fluoreszenz innerhalb des oben beschriebenen kritischen Absorptionsspektrums eines blauen Lasers (400 bis 410 nm) zeigen. Überraschenderweise wurde gefunden, dass ein Großteil dieser fluoreszierenden Partikel ein anderes rheologisches Verhalten als die Polymermatrix (Polycarbonat) selbst aufweist. Diese im Substratmaterial befindlichen Defektstellen können im fertigen Spritzgussteil, wie zum Beispiel einer optischen Scheibe, zu Fließstörungen führen. Somit unterscheiden sich diese Partikel in ihrem rheologischen Verhalten von der Polymermatrix.

Die fluoreszierenden Partikel im Granulat bzw. die fluoreszierenden Fließstörungen im Spritzgusskörper zeichnen sich durch folgende Eigenschaften aus:

Messungen der mechanischen Eigenschaften der Teilchen ergeben einen höheren Modul sowie eine größere Härte im Vergleich zum Matrixmaterial (Polycarbonat). Die Härte der Teilchen liegt dabei um bis zu 0.3 GPa höher als die der Matrix. Die Härtewerte wurden mit einem Nanoindenter der Firma Hysitron an einer Diskoberfläche und über einen Diskquerschnitt (Teilchen vs. Matrix) bestimmt. Je nach Lage der fluoreszierenden Partikel im Spritzgusskörper werden Fließstörungen und somit Defekte an der Oberfläche des Spritzgusskörpers ausgelöst. Dies gilt insbesondere unterhalb bestimmter Zykluszeiten, vor allem unterhalb 3,5 und insbesondere unter 3 Sekunden. Diese Fließstörungen, welche selbst fluoreszieren, sind nicht nur Für optische Datenspeicher, welche mit einem blauen Laser durchstrahlt werden, relevant, sondern auch für andere Spritzgusskörper, wie z. B. Linsen oder Streuscheiben, da diese Fließstörungen generell die optische Qualität der Oberfläche mindern. Bei optischen Datenspeichern werden diese Fließstörungen im Produktionsprozess von einem Scanner detektiert. Die fehlerhaften Disks werden aussortiert.

Der optische Defekt auf einem Spritzgusskörper kann im Falle einer Disk eine Länge von mehreren Millimetern erreichen. Der Defekt ist in Fließrichtung orientiert, d.h. bei optischen Disks für optische Datenträger radial orientiert. Innerhalb dieses optischen Defektes befindet sich eine fluoreszierende Fließstörung. Es wurde gefunden, dass die fluoreszierenden Fließstörungen z. B. an Disks ein Längen/Breiten-Verhältnis von 2 - 30 im Mittel von 5 - 15 aufweisen. Die Länge der fluoreszierenden Fließstörungen liegt zwischen 10 und 200 µm. Diese Werte sind stark abhängig von den eingestellten Maschinenparametern beim Spritzgussprozess, vor allem der Zykluszeit.

Es wurde ferner gefunden, dass die fluoreszierenden Körper ein Relaxationsverhalten aufweisen. Nach dem diese fluoreszierenden Fließstörungen für 2 Minuten bei 300°C getempert wurden, findet man ein Längen/Breiten-Verhältnis von ca. 1, d.h. die längliche fluoreszierende Fließstörung relaxiert zu einem sphärischen Körper; d.h. dass diese fluoreszierenden Körper thermoplastisch verformbar sind, aber keine ausreichende Löslichkeit in der Polymermatrix besitzen.

Die fluoreszierenden Fließstörungen zeigen ein bestimmtes Quellverhalten. Versetzt man diese Fließstörung für 5 Minuten mit Dichlormethan, so erhält man eine Zunahme der Fläche des fluoreszierenden Bereiches. Daraus wurde die Volumenzunahme des Defektes bestimmt - es ergibt sich eine Zunahme um den Faktor 1.1 bis 3.5 (Das Kugelvolumen des Defektes wurde aus dem Radius des flächengleichen Kreises bestimmt). Im Mittel erhält man eine Zunahme um etwa den Faktor 2. Die Polymermatrix selbst, löst sich im Falle von Polycarbonat vollständig in Dichlormethan auf, wohingegen der fluoreszierende Körper ungelöst bleibt.

Es wurde ferner gefunden, dass die fluoreszierenden Partikel bestimmte Farbwerte annehmen. Dazu wurden die Partikel mit Licht einer Quecksilberdampflampe durch ein Stufenfilter mit Durchgang ab 470 nm bestrahlt. Die Farbe der Partikel wurde mit einer digitalen Farbkamera Axiocam HRc der Firma Zeiss eingebaut in einem Mikroskop Axioplan 2 der Firma Zeiss nach dem HSI (Hue, Saturation, Intensity)-Farbmodell bestimmt. Die Methode ist z. B. beschrieben in "Digitale Bildverarbeitung mit dem PC", Hans-Jürgen Schlicht, Addison-Wesley, 1993. Misst man die Farbe der fluoreszierenden Partikel bei gegebener Einstellung der Beleuchtung, so findet man einen Huewert im Mittel von ca. 80°, eine Farbsättigung im Mittel von 150 Digits und eine Farbintensität im Mittel von 190 Digits. Die Farbe der Matrix liegt im Falle von Polycarbonat (Compact Disk) bei einen Huewert von ca. 75°, eine Farbsättigung im Mittel von 133 Digits und eine Farbintensität im Mittel von 36 Digits. Zur Angabe des korrekten Farbortes der Teilchen und der Matrix sind die Werte für Hue, Sättigung und Intensität kombiniert zu betrachten. Auf diese Weise werden nur Partikel mit einer charakteristischen Farbe gezählt, d.h. andere Partikel, wie z. B. Staub werden nicht berücksichtig.

Je größer die Anzahl fluoreszierender Partikel einer bestimmten Größe im Polymergranulat ist, desto größer ist die Wahrscheinlichkeit Fließstörungen am fertigen Spritzgusskörper zu erhalten. Damit erhöht sich die Ausschussrate des jeweiligen Produkts. Überraschenderweise wurde gefunden, dass nicht alle fluoreszierenden Teilchen zu Fließstörungen führen, sondern nur Partikel einer bestimmten Größe. Aus optischen Disks wurden fluoreszierende Partikel, die unterhalb der Fließstörungen lagen, herauspräpariert und in der Schmelze wie oben beschrieben relaxiert. Es wurden lediglich kugelförmige Teilchen mit einem Durchmesser von ≥ 10 µm ermittelt.

Ausgehend vom Stand der Technik bestand also die Aufgabe, die oben beschriebenen schädlichen fluoreszierenden Partikel abzutrennen und somit ein hochreines Substratmaterial, vorzugsweise aus Polycarbonat, welches für die Herstellung von Datenträgern, insbesondere solchen Datenträgern, welche mit blauen Laserlicht ausgelesen werden, sowie für die Herstellung von hochwertigen optischen Spritzgusskörpern, sowie hochwertigen Extrusionsformmasssen geeignet ist, bereitzustellen.

Die Aufgabe wurde dadurch gelöst, dass eine spezielle Schmelzefiltrationsmethode bereitgestellt wurde, um die fluoreszierenden Partikel abzutrennen. Dies ist insbesondere deshalb überraschend, da Partikel mit den oben dargelegten viskosen Eigenschaften sich nur schwer abtrennen lassen, weil sie aufgrund ihrer Eigenschaften verformbar sind. Über eine spezielle Tiefenfiltration gelang es, ein Substratmaterial herzustellen, welches für die Herstellung von Datenträgern, insbesondere solchen Datenträgern, welche mit blauen Laserlicht ausgelesen werden, sowie für die Herstellung von hochwertigen optischen Spritzgusskörpern geeignet ist.

Gegenstand der Erfindung ist ein Verfahren zur Filtration von Polycarbonat, dadurch gekennzeichnet, dass die Schmelze von Polycarbonat mit einem durchschnittlichen Molekulargewicht (Gewichtsmittel) von 14.000 - 30.000 g/mol, bevorzugt 15.000 - 29.000 g/mol und insbesondere bevorzugt von 16.000 bis 22.000 g/mol (bestimmt durch Gel-Permeationschromatographie), durch zumindest ein Metallvlies bestehend aus mehr als einer Schicht (Lage) dünner Metalldrähte filtriert wird, wobei das Metallvlies in einer oxidativen Atmosphäre thermisch vorbehandelt wird. Die Drähte sind dabei zu Lagen gestapelt und können ggf. durch dickere Stützdrähte stabilisiert werden. Das Metallvlies besteht aus Drähten von z. B. V4A Stahl, z. B. mit der Werkstoffnummer 1.4571. Die Stützdrähte können beispielsweise aus V4A 1,4571 oder V2A 1,4541 oder Stahl mit der Werkstoffnummer 1,4310 bestehen. Das Vlies besitzt eine Dicke von 5 mm bis 0.1 mm bevorzugt 1 mm bis 0,2 mm. Das Vlies ist alternierend aus unterschiedlich dichten Lagen (d.h. Lagen mit unterschiedlicher Porengröße) aufgebaut. Die dichteste Lage befindet sich dabei bevorzugt in der Mitte des Metallvlieses. Die dichteste Lage ist bevorzugt 0,05 bis 0,2 mm dick. Weiterhin bevorzugt besteht die dichteste Lage aus dünnen Drähten mit einem Durchmesser von 1 - 20 µm bevorzugt 2 - 10 µm, insbesondere bevorzugt 2 - 7 µm. Die weniger dichte Lage ist bevorzugt 0.05 bis 0.3 mm dick. Die Drähte dieser Schicht haben einen Durchmesser von 1 - 20 µm bevorzugt 2 - 10 µm, insbesondere bevorzugt 2 - 7 µm. Die Porengröße in der weniger dichten Lage beträgt bevorzugt 20 - 60 µm, die in der dichtesten Lage bevorzugt 1 - 10 µm. Diese Drähte können glatt oder oberflächenstrukturiert sein, was durch spezielle Behandlungsmethoden wie durch Behandlung mit Säure wie z. B. Salpetersäure oder Citronensäure oder durch Elektropolieren erreicht werden kann. Bevorzugt sind 2 bis 10, besonders bevorzugt 2 bis 8 und insbesondere 2 bis 6 Schichten. Dabei können sich an das Metallvlies auf Vor- und Rückseite noch weitere Stützgitter, Lochbleche, Streckmetall oder ähnliche zur Abstützung des Vlieses verwendete Materialien anschließen.

Die Filtration wird im Allgemeinen unter Druck, bevorzugt bei Drücken von 5 bis 35 bar, insbesondere bei 10 bis 30 bar durchgeführt.

Das Filtervlies wird in einer oxidativen Atmosphäre thermisch vorbehandelt. Alle weiteren Metalloberflächen des Filters können thermisch vorbehandelt werden. Diese thermische Vorbehandlung kann in Schutzgasatmosphäre wie Stickstoff oder Argon oder in oxidativer Atmosphäre wie Luft erfolgen, bevorzugt in oxidativer Atmosphäre.

Die thermische Vorbehandlung wird im Allgemeinen bei Temperaturen von 200 bis 1200°C, je nach Art der Temperung bzw, der entsprechenden Tempertemperatur durchgeführt. Die Dauer der thermischen Vorbehandlung beträgt im Allgemeinen 1 Minute bis 48 Stunden, bevorzugt 2 Minuten bis 30 Stunden und insbesondere 10 Minuten bis 24 Stunden und ist abhängig von der Art der Temperung.

Die thermische Vorbehandlung kann dabei durch Glühen der Metalloberfläche in einer Flamme, durch Temperung in einem Muffelofen oder im Wirbelbett oder durch Temperung in einem Umluftofen erfolgen.

Beim Glühen der Metalloberflächen in einer Gasflamme liegen die Temperaturen üblicherweise zwischen 600 und 1500°C, bevorzugt zwischen 800 und 1200°C, bei der Temperung im Muffelofen zwischen 300 und 1000°C, bevorzugt zwischen 600 und 900°C und bei der Temperung im Umluftofen bei 200 bis 500°C, bevorzugt bei 300 bis 400°C.

Die Dauer der thermischen Vorbehandlung bei Temperaturen oberhalb von 600°C beträgt im Allgemeinen 1 Minute bis 1 Stunde, im Temperaturbereich von 300 bis 700°C in der Regel 30 Minuten bis 48 Stunden, bevorzugt 30 Minuten bis 30 Stunden, insbesondere 2 bis 25 Stunden bei Temperaturen von 300 bis 500°C im Allgemeinen 1 bis 48 Stunden, bevorzugt 2 bis 30 Stunden, insbesondere 4 bis 25 Stunden. Das Ausflammen der durch Glühen behandelten Metallteile kann in einem Sand- oder Wirbelbett erfolgen.

Besonders bevorzugt werden die Metalloberflächen des Filtervlieses bei 200 bis 500°C, bevorzugt 250 bis 450°C, insbesondere 300 bis 400°C für bis zu 35 Stunden , bevorzugt 4 bis 30 Stunden, insbesondere 8 bis 26 Stunden getempert. Insbesondere bevorzugt ist eine Temperatur von 350°C für 24 Stunden.

Mit dieser Filtrationsmethode gelingt es, die Zahl fluoreszierender Partikel mit einem Teilchendurchmesser der Größe 5 - 250 µm im Polycarbonat deutlich zu reduzieren. Insbesondere werden Partikel, welche einen Teilchendurchmesser von größer 50 µm haben, deutlich reduziert.

Die Herstellung der erfindungsgemäßen Polycarbonate erfolgt u.a. nach dem Phasengrenzflächenverfahren. Dieses Verfahren zur Polycarbonatsynthese ist mannigfaltig in der Literatur beschrieben; beispielhaft sei auf II. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeignete Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis-(hydroxy-phenyl)-cycloalkane, Bis-(hydroxyphenyl)-sulfide, Bis-(hydroxyphenyl).ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3.5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC) sowie deren Mischungen.

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie deren Mischungen.

Diese und weitere geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan, 2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan,

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin; quartäre Ammoniumsalze wie Tetrabutylammonium- / Tributylbenzylammonium- /Tetracthylammonium- hydroxid / -chlorid / -bromid / -hydrogen-sulfat / -tetrafluoroborat; sowie die den Ammoniumverbindungen entsprechenden Phosphoniumverbindungen. Diese Verbindungen sind als typische Phasengrenzflächen-Katalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysatoren verwendet, dann ist eine Zugabe vor der Phosgendosierung bevorzugt. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäure, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Daneben ist die Herstellung von Polycarbonaten auch aus Diarylcarbonaten und Diphenolen nach dem bekannten Polycarbonatverfahren in der Schmelze, dem so genannten Schmelzumesterungsverfahren, möglich, das z. B. in WO-A 01/05866 und WO-A 01/05867 beschrieben ist. Daneben werden Umesterungsverfahren (Acetatverfahren und Phenylesterverfahren) beispielsweise in den US-A 34 94 885, 43 86 186, 46 61 580, 46 80 371 und 46 80 372, in den EP-A 26 120, 26 121, 26 684, 28 030, 39 845, 39 845, 91 602, 97 970, 79 075, 14 68 87, 15 61 03, 23 49 13 und 24 03 01 sowie in den DE-A 14 95 626 und 22 32 977 beschrieben.

Die folgenden Beispiele erläutern die Erfindung, sind jedoch nicht einschränkend.

### Beispiele

### Methode zur Bestimmung des Gehalts an fluoreszierenden Partikeln im Polycarbonat:

Die Analyse des Gehalts an fluoreszierenden Partikeln erfolgt durch Filtration der betreffenden Polycarbonatprobe (50 g), gelöst in Dichlormethan (LiChrosolv; Merck: 1.06044 K33506244 430) (700 ml) durch einen Teflon-Filtermembran (Fa. Bohlender GmbH, D-97847 Grünsfeld) mit 5 µm Porendurchmesser und einer Filtermembranstärke von 1 mm. Die Filterscheiben werden im Vakuum getrocknet und vor Umgebungsstaub durch eine Abdeckung geschützt, Nach Filtration wird die Filteroberfläche mittels eines Fluoreszenzmikroskops Axioplan 2 der Firma Zeiss AG, Deutschland, untersucht (gescannt). Es wird mit einer Anregungswel lenlänge von 400 - 440 nm, einer Belichtungszeit von 40 ms pro Scan und einer 25-fachen Gesamtvergrößerung gearbeitet. Die fluoreszierenden Partikel werden detektiert und die Daten über eine Bildverarbeitungssoftware (KS 300 3.0 der Firma Zeiss AG) ausgewertet. Es werden nur Partikel, mit einer charakteristischen Farbe gezählt, d.h. andere Partikel, wie z. B. Staub werden nicht berücksichtigt 8bestimmt nach dem HSI-Farbmodell, siehe vorne). Die Farbparameter zur Erkennung der fluoreszierenden Partikel werden so eingestellt, dass sie den Parametern der bei Fließstörungen in optischen Disks gefundenen Teilchen gleichen. Die Abrasterung der Oberfläche des Filters erfolgt automatisch über einen computergesteuerten Objekttisch (Fa. Zeiss AG).

Hierbei wird ein auf dem Teflonfilter zusammenhängender fluoreszierender Bereich bei den oben angegebenen Bedingungen (Wellenlänge, Gesamtvergrößerung, Belichtungszeit) automatisch detektiert und als 1 "count" gezählt. Die einzelnen fluoreszierenden Partikel, die sich auf dem Teflonfilter befinden, werden ausgezählt. Die Gesamtzahl der fluoreszierenden Partikel wird durch die Masse der im jeweiligen Ansatz eingewogenen Polycarbonatschmelze dividiert und man erhält die Partikelanzahl (fluoreszierend) bezogen auf 1 Gramm Polycarbonat (counts/g).

Als Prüfmaterial wurde ein aromatisches Polycarbonat basierend auf Bisphenol A und tert-Butylphenol als Kettenabrecher mit einer Schmelzvolumenrate MVR = 71 cm3/10 min (bei 300°C; 1,2 kg) verwendet.

Das bei 120°C im Vakuumtrockenschrank vorgetrocknete Polymergranulat wird auf einem Extruder (Brabender 35/17D, Karg Industrietechnik, 82152 Krailling), mit Datenverarbeitung/Auswertung Plasti-Corder PL2000 Vers. 2.6.9 bei verschiedenen Temperaturen aufgeschmolzen und mit verschiedenen Durchsätzen verarbeitet. Die Schmelze wird einmal nach dem erfindungsgemäßen Verfahren filtriert und zum andern nach herkömmlichen Filtrationsverfahren filtriert (Vergleich).

### Beispiel 1 (Verglcichsbeispiel - 0-Probe- keine Filtration)

Das obengenannte Polycarbonat wird in einem Extruder (s.o.) aufgeschmolzen. Die Heizung der einzelnen Beheizungszonen wird auf 305°C (Zone 1), 310°C (Zone 2) und 315°C (Zone 3) eingestellt. Anfangs wird der Extruder für 3 Minuten bei einem Durchsatz von 6 kg/Stunde gespült. Danach wird der Durchsatz auf 1.2 kg / Stunde reduziert und bei diesem Durchsatz 15 Minuten gespült. Die Temperatur der Polymerschmelze an der Düsenplatte beträgt ca. 295-305°C. Es wird eine Probe von der Polymerschmelze gezogen.

An dem so erhaltenen Polycarbonat wird die Zahl der fluoreszierenden Partikel nach der oben angegebenen Methode bestimmt. Das Ergebnis zeigt 15.2 counts/g fluoreszierende Partikel und damit einen hohen Wert an fluoreszierenden Partikeln. I

### Beispiel 2 (Vergleichsbeispiel, mit 25 µm Filter)

Der Versuch wird wie in Beispiel 1 durchgeführt, jedoch wird vor die Düsenplatte ein Schmelzefilter eingesetzt. Dazu wird aus einem dünnlagigen Edelstahl-Filter (Dicke: im Mittel 30 µm; Drahtdurchmesser ca. 10 µm), wobei das Stützgewebe entfernt wurde, d.h. nur die Filtermembran verwendet wurde, ein kreisrundes Stück mit einem Durchmesser von 41.2 mm herausgeschnitten. Die Porengröße des Filters beträgt 25 µm. In Fließrichtung des Polymeren wird erst diese Filtermembran, dann ein Stützgewebe (Streckmetall mit einer Maschenöffnung von 0.5 x 1.2 mm²), gefolgt von einem Stützring mit Drahtgewebe mit einer Maschenweite von 1.2 mm² und abschließend ein Lochblech mit Löchern von 2,2 mm installiert. Abschließend wird die Düsenplatte installiert und mit einer Überwurfmutter festgezogen. Der Durchmesser der aktiven Filtrationsfläche beträgt 30 mm. Mit diesem Aufbau ist gewährleistet, dass das Filter abgestützt, d.h. nicht beschädigt und eine Abdichtung erreicht wird.

Das Polymergranulat wird unter den oben beschriebenen Bedingungen aufgeschmolzen. Es werden nach 35 Minuten und nach 60 Minuten (gerechnet nach Installation des Filters) Schmelzeproben entnommen. Die erste Probe nach 35 Minuten ergibt einen Gehalt an fluoreszierenden Partikeln von 7.8 counts/g, Die zweite Probe nach 60 Minuten zeigt einen Wert von 8.3 counts/g. Der Druck vor dem Filter beträgt ca. 1 bar. Dieses Ergebnis belegt, dass der Einbau des oben genannten Filters den Gehalt an fluoreszierenden Partikeln nur geringfügig reduziert.

### Beispiel 3 (Vergleichsbeispiel)

Der Versuch wird wie in Beispiel 1 durchgeführt, jedoch wird in die Düsenplatte ein Schmelzefilter eingelegt. Hierzu wird ein Edelstahlvlies aus dem Werkstoff mit der Werkstoffnummer 1.4571 verwendet. Das Vlies besteht aus 2 Lagen. In Schmelzeflussrichtung folgt zunächst eine weniger dichte Lage mit einer Dicke von 0,15 mm. Die Porengröße der weniger dichten Lage beträgt im Mittel 30 µm. Die dichtere Lage schließt sich an die weniger dichte Lage an und hat eine Dicke von 0,15 mm. Die Porengröße der dichteren Schicht beträgt im Mittel ca. 10 µm. Die Metallfasern des Filters haben ein Durchmessern von ca. 5 - 7 µm. Die Dicke des Filters beträgt insgesamt 0.3 mm. Der Durchmesser des Filtervlieses beträgt 28,4 mm. Das Filtervlies ist erste Lage in Fließrichtung der Polymerschmelze. Es wird im Anschluss ein Stützgewebe (Streckmetall mit einer Maschenöffnung von 0.5 x 1.2 mm²), gefolgt von einem Stützring mit Drahtgewebe mit einer Maschenweite von 1.2 mm und abschließend ein Lochblech mit Löchern von 2.2 mm installiert. Abschließend wird die Düsenplatte installiert und mit einer Überwurfmutter festgezogen. Mit diesem Aufbau ist gewährleistet, dass das Filter abgestützt, d.h. nicht beschädigt wird und eine Abdichtung erreicht wird. Der Durchmesser der aktiven Filtrationsfläche beträgt 19 mm. Das Polymergranulat wird unter den oben beschriebenen Bedingungen aufgeschmolzen. Nach 25 Minuten (gerechnet nach Einbau des Schmelzefilters), wird eine Probe von der Polymerschmelze entnommen. Der Druck vor dem Filtervlies beträgt 55 - 60 bar.

An dem so erhaltenen Polycarbonat wird die Zahl der fluoreszierenden Partikel nach der oben angegebenen Methode bestimmt.

Die Auswertung ergibt 8,7 counts/g.

Damit zeigt sich, dass bei Bedingungen, die außerhalb der erfindungsgemäßen Bedingungen liegen, eine effektive Abtrennung der fluoreszierenden Partikeln nur ungenügend möglich ist.

### Beispiel 4 (Vergleichsbeispiel)

Der Versuch wird wie in Beispiel 1 durchgeführt, jedoch wird in die Düsenplatte ein Schmelzefilter eingelegt. Das Metallfiltervlies hat den gleichen Aufbau wie in Beispiel 3 beschrieben. Der Durchmesser des Filtervlieses beträgt jedoch 41.2 mm. Der Durchmesser der aktiven Filtrationsfläche beträgt 30 mm. Das Polymergranulat wird unter den oben beschriebenen Bedingungen aufgeschmolzen. Nach 25 Minuten (gerechnet nach Einbau des Schmelzefilters, wird die erste Probe entnommen, nach weiteren 25 Minuten wird eine zweite Probe entnommen. Der Druck vor dem Filtervlies beträgt 20-25 bar.

An dem so erhaltenen Polycarbonat wird die Zahl der fluoreszierenden Partikel nach der oben angegebenen Methode bestimmt.

Die Auswertung der ersten Probe ergibt 1.56, die der zweiten Probe 1.18 counts/g fluoreszierender Partikel.

Damit zeigt sich dass die erfindungsgemäße Methode der Schmelzefiltration zu einer deutlichen Verringerung der fluoreszierenden Partikel in der Polymerschmelze führt.

### Beispiel 5 (erfindungsgemäß, mit passiviertem Filter)

Der Versuch wird wie in Beispiel 4 durchgeführt, jedoch wird das Schmelzefilter zuvor für 24 Stunden bei 350°C in einem Umluftofen getempert. Das Filter wird wie in Beispiel 4 beschrieben eingebaut. Das Polymergranulat wird unter den oben beschriebenen Bedingungen aufgeschmolzen. Nach 3 Stunden wird eine Probe entnommen.

Die Auswertung der Probe ergibt 0.47 counts/g fluoreszierender Partikel.

Man erkennt an Hand der signifikant gesenkten Anzahl fluoreszierender Partikel deutlich den Vorteil der erfindungsgemäßen Filtrationsmethode.

## Patentansprüche

1. Verfahren zur Filtration von Polycarbonatschmelzen, wobei die Schmelze von Polycarbonat mit einem mittleren Molekulargewicht von 14.000 bis 30.000 g/mol durch wenigstens ein Metallvlies eine filtriert wird, **dadurch gekennzeichnet** durch, dass des Metallvlies eine Dicke von 5 mm bis 0,1 mm hat, bestehend aus 2 oder mehr Schichten, wobei mindestens eine Schicht, 0,05 bis 0,2 mm dick ist und eine Porengröße von 1 bis 10 µm aufweist, wobei das Filtervlies in oxidativer Atmosphäre bei Temperaturen von 300 bis 400°C für 4 bis 35 Stunden thermisch vorbehandelt wird.

2. Verfahren gemäß Anspruch 1, wobei 2 bis 10 Schichten verwendet werden.

3. Verfahren gemäß Anspruch 1, wobei die Dicke des Metallvlieses 1 mm bis 0,2 mm beträgt.

4. Verfahren gemäß Anspruch 1, wobei die Schicht, die 0,05 bis 0,2 mm dick ist, aus Drähten mit einem Durchmesser von 1 - 20 µm besteht.

5. Verfahren gemäß Anspruch 1, wobei die weniger dichte Schicht 0,05 bis 0,3 mm dick ist.

6. Verfahren gemäß Anspruch 5, wobei die Porengröße der weniger dichten Schicht 20 bis 60 µm beträgt.

7. Verfahren gemäß Anspruch 1, wobei bei Drücken von 5 bis 35 bar und Temperaturen von 220 bis 400°C filtriert wird.

8. Verfahren gemäß Anspruch 1, wobei das Filtergewebe aus Edelstahl ist.

9. Verfahren gemäß Anspruch 1 zur Entfernung von fluoreszierenden Partikeln in Polycarbonat.

## Claims

1. Method for filtering polycarbonate melts, where the melt of polycarbonate having an average molecular weight of from 14 000 to 30 000 g/mol is filtered through at least one metal nonwoven, **characterized in that** the metal nonwoven has a thickness of from 5 mm to 0.1 mm and consists of two or more layers, where at least one layer is from 0.05 to 0.2 mm thick and has a pore size of from 1 to 10 µm, where the filter nonwoven is thermally pretreated in an oxidative atmosphere at temperatures of from 300 to 400°C for from 4 to 35 hours.

2. Method according to Claim 1, wherein from 2 to 10 layers are used.

3. Method according to Claim 1, wherein the thickness of the metal nonwoven is from 1 mm to 0.2 mm.

4. Method according to Claim 1, wherein the layer which is from 0.05 to 0.2 mm thick consists of wires having a diameter of 1-20 µm.

5. Method according to Claim 1, wherein the less dense layer has a thickness of from 0.05 to 0.3 mm.

6. Method according to Claim 5, wherein the pore size of the less dense layer is from 20 to 60 µm.

7. Method according to Claim 1, wherein the filtration is carried out at pressures of from 5 to 35 bar and temperatures of from 220 to 400°C.

8. Method according to Claim 1, wherein the filter fabric is composed of stainless steel.

9. Method according to Claim 1 for removing fluorescent particles in polycarbonate.

## Revendications

1. Procédé de filtration de masses fondues de polycarbonate, la masse fondue de polycarbonate d'un poids moléculaire moyen de 14 000 à 30 000 g/mol étant filtrée par au moins un non-tissé métallique, **caractérisé en ce que** le non-tissé métallique a une épaisseur de 5 mm à 0,1 mm, est constitué de 2 couches ou plus, au moins une couche étant d'une épaisseur de 0,05 à 0,2 mm et présentant une taille de pore de 1 à 10µm, le non-tissé de filtration étant prétraité thermiquement dans une atmosphère oxydative à des températures de 300 à 400 °C pendant 4 à 35 heures.

2. Procédé selon la revendication 1, dans lequel 2 à 10 couches sont utilisées.

3. Procédé selon la revendication 1, dans lequel l'épaisseur du non-tissé métallique est de 1 mm à 0,2 mm.

4. Procédé selon la revendication 1, dans lequel la couche qui est d'une épaisseur de 0,05 à 0,2 mm est constituée de fils d'un diamètre de 1 à 20 µm.

5. Procédé selon la revendication 1, dans lequel la couche moins épaisse est d'une épaisseur de 0,05 à 0,3 mm.

6. Procédé selon la revendication 5, dans lequel la taille de pore de la couche moins épaisse est de 20 à 60 µm.

7. Procédé selon la revendication 1, dans lequel la filtration est réalisée à des pressions de 5 à 35 bar et des températures de 220 à 400°C.

8. Procédé selon la revendication 1, dans lequel le tissu de filtration est en acier inoxydable.

9. Procédé selon la revendication 1, pour l'élimination de particules fluorescentes dans un polycarbonate.
